# EUROPEAN PATENT APPLICATION

(11) **EP 2 596 938 A1**
(43) Date of publication of application: **29.05.2013**
(21) Application number: 12189226.9
(22) Date of filing: 19.10.2012
(51) Int. Cl.: B29C 45/00, B29C 45/56, B29C 45/26

(54) **Pattern transfer medium manufacturing apparatus, pattern transfer manufacturing method, disc-shaped pattern transfer medium, and pattern transfer medium**

(30) Priority: 24.11.2011 JP 2011256433
(71) Applicant: Sony Corporation, Tokyo 108-0075 (JP); SONY DADC Corporation, Shinagawa-ku Tokyo 141-0001 (JP)
(72) Inventor: Ohishi, Hiroyuki, Shinagawa-Ku, Tokyo 141-0001 (JP)
(74) Representative: Lewis, Darren John

(57) **Abstract**

Provided is a pattern transfer medium manufacturing apparatus including a disc injection compression molding unit that forms a disc-shaped pattern transfer medium by an injection compression molding using a disc molding die and a disc-shaped stamper and a cutting unit that performs cutting the periphery of a concave and convex pattern portion on the disc-shaped pattern transfer medium, which is formed due to a transfer by the injection compression molding, as a target object.

## Description

The present invention relates to an apparatus for and a method of manufacturing a transfer medium onto which a necessary concave and convex pattern is transferred by an injection compression molding using a stamper, and a pattern transfer medium (disc shape or arbitrary shape).

Japanese Unexamined Patent Application Publication No. 2008-170534 and Japanese Unexamined Patent Application Publication No. 2007-001290 are examples of the prior art.

For example, various biochips are disclosed, such as a DNA micro array and a micro channel.

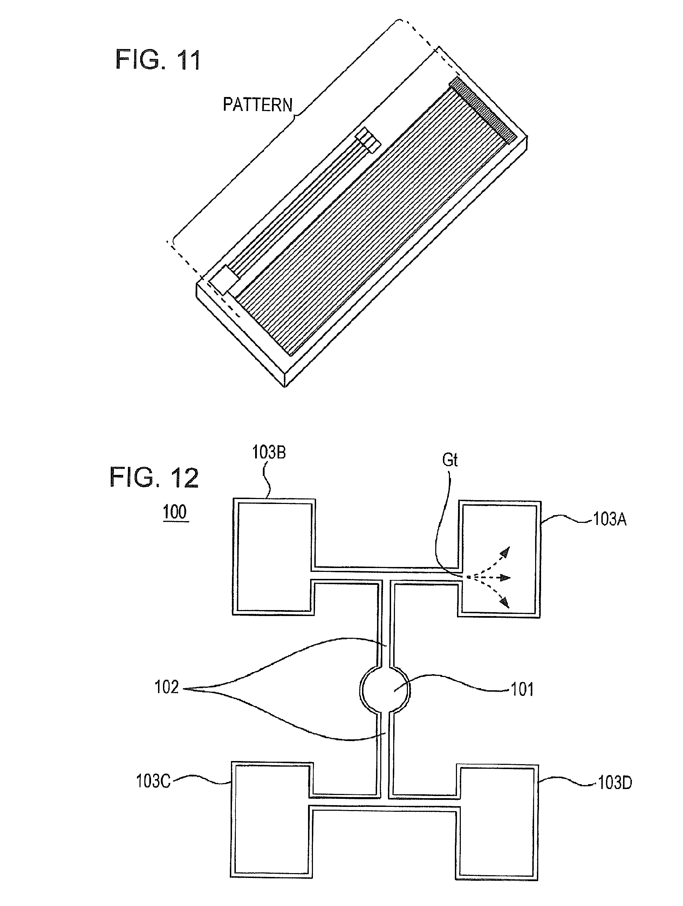

Fig. 11 shows a view schematically illustrating one example of an external appearance of the biochip.

The biochip takes on, for example, the plate-shaped external appearance as illustrated in the drawing, and a concave and convex pattern such as a fine channel is formed on a surface of the biochip ("pattern" in the drawing).

Currently, manufacturing of a plate-shaped biochip of this kind is performed by an injection compression molding process that uses a runner method using a polygonal molding die portion 103, as illustrated in Fig. 12.

Specifically, in the runner method, a thermoplastic material is introduced in a molten state from a pool or reservoir portion 101 in the drawing, and is injected into each of the molding die portions 103 (103A to 103D in the drawing) via a runner portion 102. Thereafter, pressurization and cooling are performed and removal of a molding material from a die is performed.

Furthermore, for purpose of confirmation, the shape of the molding die portion 103 is a polygonal shape in order to manufacture the plate-shaped biochip.

In the runner method described above, since an injection gate Gt made of thermoplastic material, illustrated in Fig. 12, is provided in a side wall part of the molding die portion 103, there is a tendency for the material to have difficulty spreading into every corner inside the corresponding molding die portion 103.

In this respect, application of a comparatively large pressure is necessary to make the in-plane thickness of the chip uniform after molding. For example, in a case where an in-plane thickness tolerance of approximately ±0.6 µm is necessary, a force of approximately 100 tonnes is needed.

Furthermore, along with this, the time for which the pressure is applied to make the in-plane thickness uniform is necessary to a comparatively-longer extent, and for example the tact time asks for at least 30 seconds or more.

In this manner, according to a runner method of the prior art, the process time necessary to generate a fine-processed biochip such as a biochip with high precision is comparatively longer, which is a disadvantage in terms of improving productivity.

Furthermore, in a case of the runner method, a connection portion connecting to the runner portion 102 needs to be cut (excised) from each chip after molding, but there is the disadvantage that a trace of this cutting remains in the product. Although the cutting trace can be trimmed (smoothed) by, for example, cutting, there is associated time and cost to do this.

It is desirable to achieve a shortening of the manufacturing time, while securing the molding precision, in relation to the manufacturing of a pattern transfer medium onto which a fine concave and convex pattern, is transferred, such as a biochip.

According to an embodiment of the present invention, the pattern transfer medium manufacturing apparatus is configured as follows.

There is provided the pattern transfer medium manufacturing apparatus including a disc injection compression molding unit that forms a disc-shaped pattern transfer medium by an injection compression molding using a disc molding die and a disc-shaped stamper.

Furthermore, a cutting unit is included which performs cutting on the periphery of a concave and convex pattern portion on the disc-shaped pattern transfer medium, which is formed due to a transfer by the injection compression molding, as a target object.

Furthermore, according to another embodiment of the present invention, there is provided a pattern transfer medium manufacturing method including forming a disc-shaped pattern transfer medium by an injection compression molding using a disc molding die and a disc-shaped stamper, and performing cutting on the periphery of a concave and convex pattern portion on the disc-shaped pattern transfer medium, which is formed due to a transfer by the injection compression molding, as a target object.

Furthermore, according to still another embodiment of the present invention, there is provided a disc-shaped pattern transfer medium having a disc-shaped external appearance. The disc-shaped pattern transfer medium has a predetermined concave and convex pattern transferred onto at least a surface thereof. In addition, the periphery of the transfer portion of the concave and convex pattern is cut along an arbitrary shape and thus a connection to a main portion of a medium is cut off.

Furthermore, according to still another embodiment of the present invention, there is provided a pattern transfer medium that is manufactured by going through forming a disc-shaped pattern transfer medium by an injection compression molding using a disc molding die and a disc-shaped stamper, and performing cutting on the periphery of a concave and convex pattern portion on the disc-shaped pattern transfer medium, as a target object, which is formed due to a transfer by the injection compression molding.

Since the present invention described above performs the injection compression molding using the disc molding die and the disc-shaped stamper, for example, the same injection molding process as that used in generating a substrate for an optical disc storage medium (hereinafter called an optical disc) such as a CD (Compact Disc), a DVD (Digital Versatile Disc), a BD (Blu-ray Disc: a registered trademark) may be used.

Since the same injection molding process as with the optical disc is used in this manner, a molding material of a pattern transfer medium may be radially injected from the central portion of a die (that is, a central portion of the disc), and the corresponding molding material may easily spread to every corner inside the die.

Thus, a pressure necessary to make an in-plane thickness uniform may be made smaller than in a case where a runner method (a polygonal molding), or the pressure application time necessary to make the in-plane thickness uniform may be also made shorter. As a result, a shortening of the tacttime may be achieved.

Furthermore, since a connection portion in the periphery of an injection gate is cut, accompanying a punching process to form a center hole, when the same injection molding process as with the optical disc is used, a cutting trace does not remain on the pattern transfer medium, and a special trimming process on the cutting trace may not be necessary. In this respect, a shortening of the manufacturing time is also achieved.

Furthermore, when the same injection molding process as with the optical disc is used, for example, the transfer precision of a fine pattern, such as a pitch of approximately several µm, may be made higher than in a case of the runner method. In addition, it may be also understood that the injection compression molding of the optical disc is excellent in this manner in terms of the transfer precision of the fine pattern, from the fact that the runner method is not used in the process of manufacturing the optical disc, for example, where an exceedingly fine concave and convex pattern such as an emboss pit has to be transferred with high precision.

According to the present invention, as described above, a shortening of the manufacturing time and the improvement in manufacturing efficiency are achieved more than in a case of using the injection compression molding by the runner method, in manufacturing the pattern transfer medium onto which the fine concave and convex pattern is transferred.

Furthermore, at the same time, the transfer precision of the fine pattern may be improved more than in a case of using the injection compression molding by the runner method.

### BRIEF DESCRIPTION OF THE DRAWINGS

Fig. 1 is a diagram illustrating an internal configuration of a pattern transfer medium manufacturing apparatus according to an embodiment;
Fig. 2 is a view illustrating an outline of a pattern transfer medium manufacturing method according to the embodiment;
Fig. 3 is a view illustrating a structure of a surface (a transfer surface) of a stamper that is used in the embodiment;
Fig. 4 is a view illustrating a disc injection molding technique according to the embodiment;
Figs. 5A and 5B are views comparing states of transfer surfaces of pattern transfer media manufactured by an injection compression molding using a runner method and by the injection compression molding according to the embodiment, respectively;
Fig. 6 is a view illustrating a specific detail of a covering process;
Figs. 7A and 7B are views illustrating a process of adjusting a medium arrangement relationship with respect to a cutting position, which has to be performed with respect to a disc-shaped pattern transfer medium that is a target cutting object;
Fig. 8 is a view illustrating a configuration that has to be provided in a cutting unit to realize a positional relationship relation adjustment process as the embodiment;
Fig. 9 is a view illustrating a cross-sectional structure of a drill portion that the cutting unit uses in cutting;
Fig. 10 is a view illustrating a configuration to remove cutting pieces that the cutting unit provides;
Fig. 11 is a view schematically illustrating one example of an external appearance of a biochip; and
Fig. 12 is a view illustrating the injection compression molding using the runner method (a polygonal molding).

### DETAILED DESCRIPTION OF EMBODIMENTS

Embodiments according to the present invention are described below.

Furthermore, to description in the following order.
1. Manufacturing Apparatus and Manufacturing Method According to Embodiments
1-1. Configuration of Apparatus and Outline of Manufacturing Method
1-2. Disc Injection Molding Process
1-3. Covering Process
1-4. Cutting Process
2. Modification Examples

### 1. Manufacturing Apparatus and Manufacturing Method According to Embodiments

### 1-1. Configuration of Apparatus and Outline of Manufacturing Method

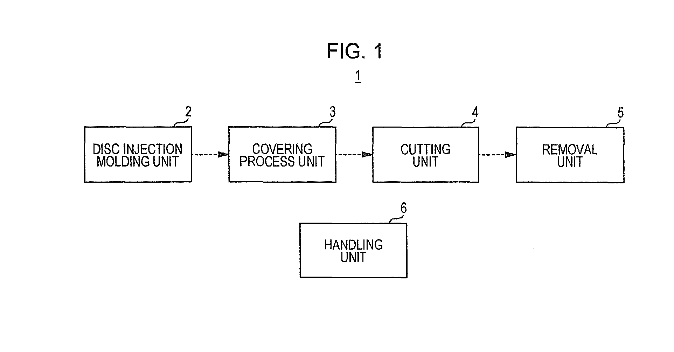

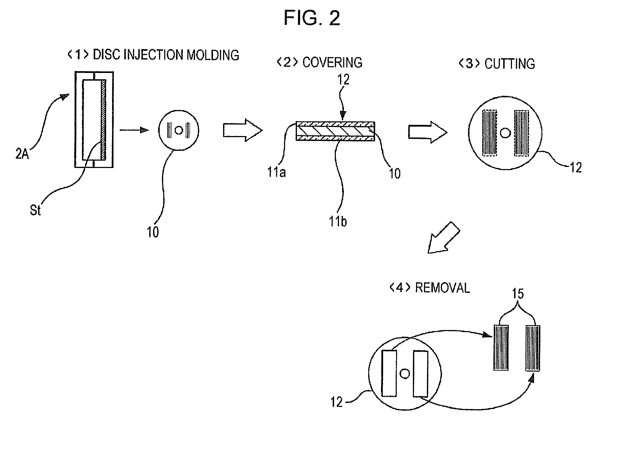

A configuration of a pattern transfer medium manufacturing apparatus 1 as an embodiment according to the present invention and an outline of a pattern transfer medium manufacturing method as the embodiment are described referring to Figs. 1 and 2.

Fig. 1 is a diagram illustrating an internal configuration of the pattern transfer medium manufacturing apparatus 1, and Fig. 2 is a view illustrating the outline of the pattern transfer medium manufacturing method as the embodiment.

Furthermore, a case of manufacturing a plate-shaped pattern transfer medium, such as a biochip illustrated in Fig. 11 described above, as a pattern transfer medium onto which a fine concave and convex pattern is transferred, is exemplified below as one example.

As illustrated in Fig. 1, the pattern transfer medium manufacturing apparatus 1 according to the present embodiment includes a disc injection molding unit 2, a covering process unit 3, a cutting unit 4, a removal unit 5, and a handling unit 6.

The disc injection molding unit 2 is a part that is responsible for a disc injection molding process indicated as <1> in Fig. 2.

Specifically, the disc injection molding unit 2 generates a disc-shaped pattern transfer medium onto which a necessary concave and convex pattern is transferred, (hereinafter referred to as a disc-shaped pattern transfer medium 10), by the same injection molding technique as that used in the injection molding for a disc substrate for an optical disc such as a CD, a DVD and a BD, using a molding die 2A (a disc molding die) and a stamper St as illustrated in Fig. 2.

At this point, in the present specification, the "disc molding die" means a molding die which has a cavity internal space of which the shape is a disc shape.

The covering process unit 3 is a part that is responsible for a covering process indicated as <2> in Fig. 2, and performs the covering process with respect to the disc-shaped pattern transfer medium 10 generated by the disc injection molding unit 2. Specifically, the covering process unit 3 performs the covering of the corresponding disc-shaped pattern transfer medium 10 by forming a protective film 11 with respect to the disc-shaped pattern transfer medium 10.

More specifically, the formation of the protective film 11 in such a case, as illustrated in Fig. 2 is achieved by forming a protective film 11a with respect to a surface of the disc-shaped pattern transfer medium 10 (a surface onto which the pattern is transferred by the stamper St: a pattern transfer surface), and by forming a protective film 11b with respect to a reverse surface (a pattern non-transfer surface).

Furthermore, the protective film 11 has to be formed in such a manner as to be removable later, and for example, is formed by being pasted with, for example, an adhesive material.

The disc-shaped pattern transfer medium 10, on which the protective films 11a and 11b are formed by the covering process described above, is expressed hereinafter as a protective-film-pasted medium 12, as illustrated in Fig. 2.

The cutting unit 4 is a part that is responsible for a cutting process indicated as <3> in Fig. 2, and performs the cutting process with respect to the protective-film-pasted medium 12 in order to possibly remove the pattern transfer medium having a predetermined (in this case, plate-shaped) external appearance. In other words, a part of the corresponding protective-film-pasted medium 12, which is the periphery of a pattern transfer portion formed on the disc-shaped pattern transfer medium 10 after covering, is cut along the predetermined shape described above.

At this point, as described below, the cutting unit 4 starts cutting along the side of the protective film 11a formed on the pattern transfer surface of the disc-shaped pattern transfer medium 10 and stops the cutting at a position where the protective film 11b formed on the pattern non-transfer surface is not cut. At this point, since a connection between a pattern transfer portion and a main portion of the medium is cut, and the protective film 11b is not cut, the pattern transfer portion and the main portion of the medium may be integrally handled by being linked to each other via the protective film 11b. In short, as a result, the affinity with, for example, an existing equipment for and an apparatus for manufacturing an optical disc may be increased, because a post-cutting-process medium may be stacked on an existing stacking pole for the optical disc, and the handling of the post-cutting-process medium may be performed using the existing apparatus for handling the optical discs.

The removal unit 5 is a part that is responsible for a removal process indicated as <4> in Fig. 2, and removes the pattern transfer portion of which the periphery is cut by the cutting process in the predetermined shape described above, from the protective-film-pasted medium 12 that finishes going through the cutting process by the cutting unit 4. Specifically, the pattern transfer portion is removed from the main portion of the medium along the predetermined shape described above, by separating the protective film 11b pasted on at least the pattern non-transfer surface. In a case of the present example, in the removal unit 5, even the separation of the protective film 11a pasted on the pattern transfer surface is moreover performed on the pattern transfer portion that is removed in this manner by the separation of the protective film 11b from the pattern non-transfer surface.

The pattern transfer portion on which the removal is performed in this manner by the removal process is expressed hereinafter as a post-removal pattern transfer medium 15.

The handling unit 6 generally shows a part that performs conveyance of the disc-shaped pattern transfer medium 10 from the disc injection molding unit 2 to the covering process unit 3, conveyance of the protective-film-pasted medium 12 from the covering process unit 3 to the cutting unit 4, and conveyance of the (post-cutting) protective-film-pasted medium 12 from the cutting unit 4 to the removal unit 5. The conveyance of the medium to each unit is performed, for example, using a conveyance mechanism such as a robot arm or a belt conveyor.

### 1-2. Disc Injection Molding Process

First, a specific detail of the disc injection molding process by the disc injection molding unit 2 is described.

The disc injection molding process, as described above, uses the stamper St and the molding die 2A, and is performed by the same technique as the injection molding technique for the disc substrate for the optical disc.

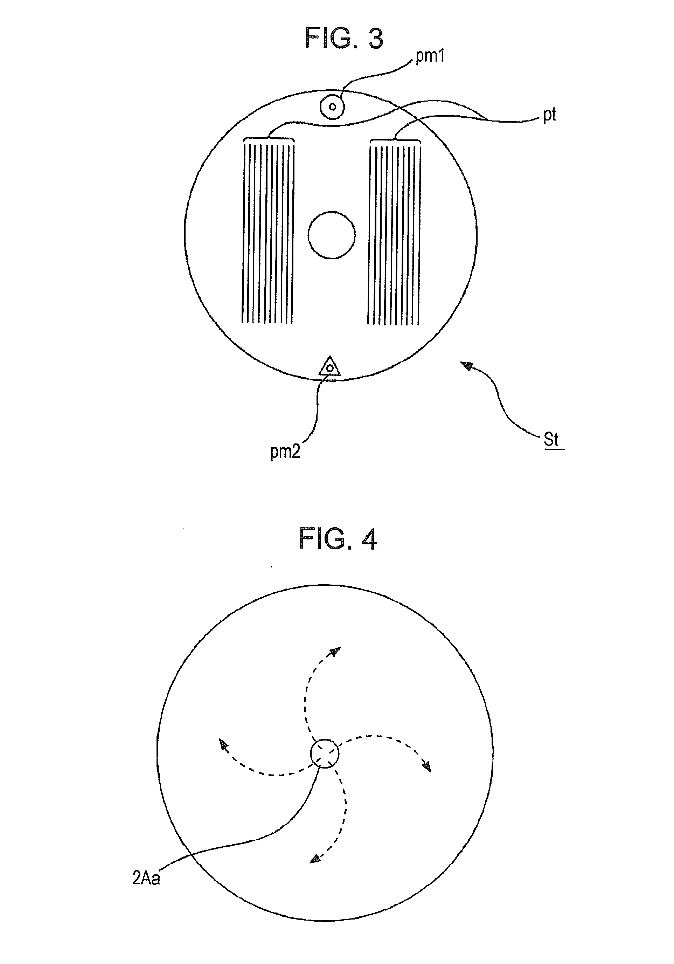

Fig. 3 is a view illustrating the structure of the surface (the transfer surface) of the stamper St that is used in the present example.

First, the external appearance of the stamper St is in the form of a circle (disc-shaped), as illustrated in the drawing.

Then, a transfer pattern pt is formed on the surface of the stamper St in such a case.

The transfer pattern pt is a concave and convex pattern configured to transfer a concave and convex pattern to be formed on the post-removal pattern transfer medium 15 described above. Since in the present example two of the post-removal pattern transfer media 15 may be obtained per disc, two of the transfer patterns pt are formed.

Furthermore, in a case of the present example, a mark transfer pattern pm1, and a mark transfer pattern pm2 are formed on the surface of the stamper St. The mark transfer pattern pm is provided to form a pattern as a mark M as described below, in a predetermined position of the disc-shaped pattern transfer medium 10, but the significance of forming the corresponding mark M is described below.

For purpose of confirmation, the stamper St like this may be also generated by the same technique as with a stamper used in the optical disc manufacturing process. Specifically, the stamper St may be generated using a cutting apparatus (a mastering apparatus) that is used in making a stamper, in manufacturing the optical disc. In this respect, the increase in the affinity with the existing equipment for manufacturing the optical disc is also achieved.

In the disc injection molding process illustrated in Fig. 2, the stamper St like this is set inside the molding die 2A as a disc molding die having a cavity internal space of which the shape is a disc shape, the corresponding cavity is filled with thermoplastic material, and formation of the disc-shaped pattern transfer medium 10 is performed.

Specifically, since the disc injection molding technique in such a case is the same as the injection molding technique for the optical substrate, the injection of the thermoplastic material is performed from an injection gate 2Aa provided in the central portion of the die (that is, the central portion of the disc) illustrated in Fig. 4.

In this case, the thermoplastic material is injected in a heated molten state into the molding die 2A from the corresponding injection gate 2Aa, and then pressurization and cooling are performed. After cooling, the removal of the disc-shaped pattern transfer medium 10 from the molding die 2A is performed.

Furthermore, in the present example, for example, a thermoplastic resin material such as a polycarbonate is used as the thermoplastic material, described above, which is to be the molding material of the disc-shaped pattern transfer medium 10.

According to the disc injection molding process described above, since the injection of the thermoplastic material is radially performed from the central portion of the disc as illustrated in Fig. 4, the corresponding thermoplastic material may easily spread to every corner inside the die.

Thus, the pressure necessary to make the in-plane thickness of the pattern transfer medium uniform may be smaller than in a case where the runner method (a polygonal molding), as described referring to Fig. 12 that follows, is employed, and the pressure application time necessary to make the in-plane thickness uniform may be also shortened.

As a result, a shortening of the tact time is achieved.

Specifically, for example, the force necessary to achieve an extent to which an in-plane thickness tolerance is in the range of ±0.6 µm asks for approximately 100 tonnes in the case of the runner method, and in contrast, it may be suppressed to approximately 30 tonnes according to the injection compression molding technique of the present example. Furthermore, the tact time asks for 30 seconds or more in the runner method, but it may be also suppressed to approximately 5 seconds in the present example.

Further, since the same injection molding process as with the optical disc is used in the present embodiment, a process of punching a center hole is performed when the pattern transfer medium 10 is removed from the molding die 2A.

Because of this, in a case of the present embodiment, a connection portion linked to a channel formed in the periphery of the injection gate is excised by the process of forming the corresponding center hole, and as a result, cutting traces does not remain on the pattern transfer medium and thus a special trimming process on the cutting trace may be also unnecessary. In this respect, a shortening of the manufacturing time is also achieved.

Furthermore, when the same injection molding process as with the optical disc, for example, the precision with which to transfer a fine pattern, equal to or less than approximately several µm in pitch, may be made higher than in a case of the runner method.

In addition, it may be also understood that the optical-disc injection compression molding technique is excellent in this manner in terms of the precision with which a fine pattern is transferred, from the fact that the runner method is not employed in the process of manufacturing the optical disc, where an exceedingly fine concave and convex pattern such as an embossed pit has to be transferred with high precision.

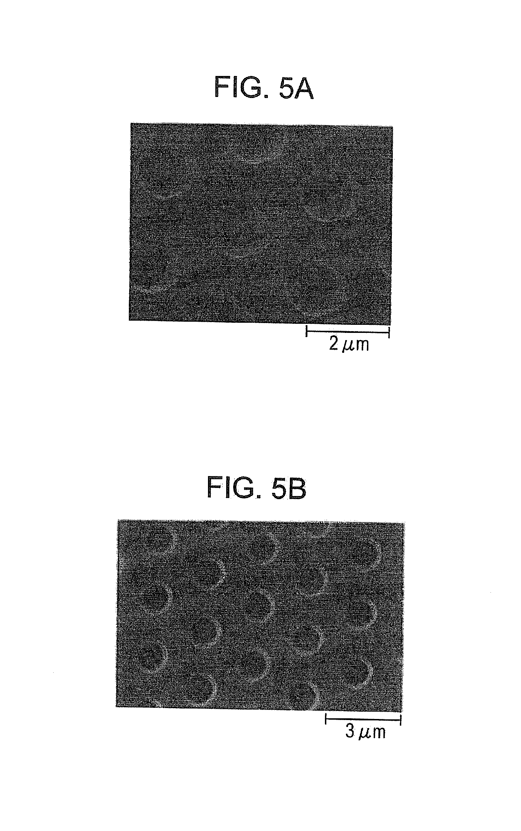

Figs. 5A and 5B are views comparing appearances of the transfer surfaces of the pattern transfer media actually manufactured by the injection compression molding using the runner method and by the injection compression molding according to the present embodiment, respectively.

Fig. 5A is an observation image, captured by an electron microscope, of the appearance of the transfer surface of the pattern transfer medium manufactured by the injection compression molding (the polygonal molding) using the runner method. Fig. 5B is an observation image, captured by the electronic microscope, of the appearance of the transfer surface of the pattern transfer medium 10 manufactured by the injection compression molding according to the present embodiment. In addition, the transfer pattern is a dot pattern with a predetermined size pitch.

From Figs. 5A and 5B, it may be apparent that an edge part of each dot (a fine concave portion) drifts (the side wall is inclined) in a case of the runner method, and in contrast, an edge part of each dot stands (an angle of the side wall is in a state closer to perpendicularity) in the injection molding according to the present embodiment.

From these results, it may be understood that the injection molding technique according to the present embodiment may achieve the fine pattern transfer with high precision.

Furthermore, since the injection molding process for the optical disc is used in the present embodiment, the diversion of, for example, existing equipment and apparatus is possible in stacking and handling the disc-shaped pattern transfer medium 10.

Since it is not necessary to develop and install new stacking and handling mechanisms, a reduction in the cost, necessary for manufacturing the pattern transfer medium may be achieved that much.

Furthermore, of course, the diversion of the disc injection molding unit 2 is also possible, and in this respect, a reduction in the cost is also achieved.

### 1-3. Covering Process

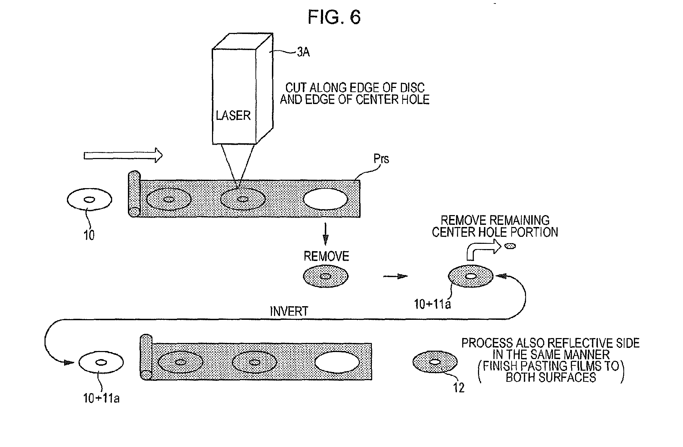

Subsequently, the specific details of the covering process (<2>) by the covering process unit 3 are described referring to Fig. 6.

In the covering process unit 3, as illustrated in the drawing, for example, protective material sheets Prs are sequentially pasted on the surfaces of the disc-shaped pattern transfer media 10 (the pattern transfer surfaces) which sequentially arrive by conveyance, for example, a belt conveyor.

In this case, the protective material sheet Prs has a structure in which a protective film material and an adhesive material are laminated on each other, and the pasting is performed by pushing a formation surface of the corresponding adhesive material against a surface of the disc-shaped pattern transfer medium 10. In a case of the present example, the protective material sheet Prs is colorless and transparent. Furthermore, the width of the protective material sheet Prs is greater than the diameter of the disc-shaped pattern transfer medium 10 so that the protective material sheet Prs may be pasted on the entire surface of the disc-shaped pattern transfer medium 10.

The removal of an unnecessary part of the protective material sheet Prs after pasting is performed by the laser cutting using a laser 3A. Specifically, a laser emitted from the laser 3A is caused to trace along a disc edge of the disc-shaped pattern transfer medium 10 on which the protective material sheet Prs is finished being pasted, and along a center hole edge and to perform the cutting on unnecessary parts.

After cutting, the disc-shaped pattern transfer medium 10 with the protective material sheet Prs being pasted on its surface is removed, a part of the protective material sheet Prs remaining on a center hole part as illustrated in the drawing is removed, and the disc-shaped pattern transfer medium 10 on which the protective film 11a is formed is obtained (expressed as "10 + 11a" in the drawing).

Thereafter, the disc-shaped pattern transfer media 10 on which the protective films 11a are in this manner formed are sequentially inverted (the back sides are revealed), and the formation of the protective film 11b is performed using the protective material sheet Prs by the same technique as that used in the formation of the protective film 11a described above.

Thus, the paste of the film with respect to both surfaces of the disc-shaped pattern transfer medium 10 as the protective film 11 is finished. In other words, the protective-film-pasted medium 12 illustrated in preceding Fig. 2 is obtained.

At this point, due to the paste of the protective film 11a on the surface, a situation may be effectively prevented from occurring, where cutting pieces of the protective film 11a are mixed into the transfer pattern as the fine concave and convex pattern in a cutting process described below, and thus considerably decreases the quality of the product (or causes the product to be unusable).

Furthermore, as described above, due to the formation of the protective film 11b on the reverse surface, the pattern transfer portion and the main portion of the medium may be integrally handled even after the cutting process, and the affinity with, for example, the existing equipment and apparatus for manufacturing the optical disc may be increased.

In addition, in that the pattern transfer portion and the main portion of the medium may be integrally handled even after the cutting process, the formation of the protective film 11 on the disc-shaped pattern transfer medium 10 may be performed with respect to at least the pattern transfer surface only.

For example, the integral handling after cutting is possible, by causing the cutting to begin from the pattern non-transfer surface, not from the pattern transfer surface and to stop at the position where the protective film 11a formed on the pattern transfer surface is not cut.

Furthermore, according to this technique, the mixing of the cutting pieces into the transfer pattern may be also prevented at the same time.

### 1-4. Cutting Process

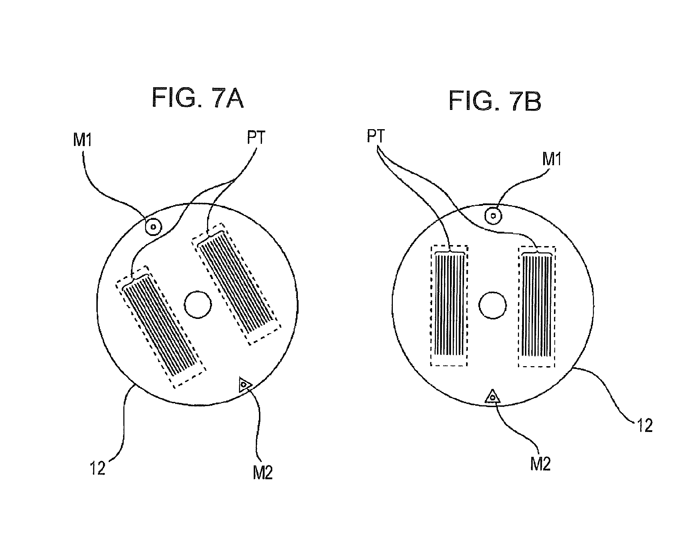

Subsequently, the specific details of the cutting process (<3>) by the cutting unit 4 are described referring to Figs. 7A to 10.

First, the process of adjusting a medium arrangement relationship with respect to a cutting position, which is to be performed with respect to the disc-shaped pattern transfer medium 10 (the protective-film-pasted medium 12) which is regarded as a target cutting object in the cutting process is described referring to Figs. 7A and 7B.

At this point, because there is no guarantee that the in-plane angle (the rotation angle) of the stamper St within the die is held constant, in a case where the injection molding using the stamper St, as in the present example, is performed by the same technique as the injection molding technique for the optical disc substrate, the disc-shaped pattern transfer medium 10 (the protective-film-pasted medium 12) conveyed to the cutting unit 4 is in a state where an angle (the rotation angle) thereof is inclined with respect to the prescribed angle.

In Fig. 7A, an example of the protective-film-pasted medium 12 is illustrated which is conveyed in a state of being inclined with respect to the prescribed angle in this manner. For purpose of confirmation, since the protective film 11 pasted on the disc-shaped pattern transfer medium 10 is a transparent material, the visual recognition of the transfer pattern is possible.

At this time, in a case where the cutting position is fixed by the cutting unit 4, the periphery of the pattern transfer portion PT formed on the corresponding medium 12 may not be appropriately, when the protective-film-pasted medium 12 arrives by conveyance in a state of being inclined with respect to the prescribed angle as described above.

Therefore, in the present example, by adjusting the arrangement relationship of the protective-film-pasted medium 12, which arrives by conveyance, with respect to the fixed cutting position, the periphery of the pattern transfer portion PT may be appropriately cut with regard to each protective-film-pasted medium 12.

In Fig. 7B, the state of the protective-film-pasted medium 12 after the arrangement relationship adjustment is illustrated.

In Fig. 7B, when it is assumed that the position indicated as a broken line is an appropriate external position of the post-removal pattern transfer medium 15, the adjustment is performed in such a manner that the position indicated as the corresponding broken line agrees with the cutting position fixed by the cutting unit 4.

In the present example, an adjustment technique using camera-captured images is illustrated as the specific arrangement relationship adjustment technique.

Specifically, first, in the present example, a predetermined concave and convex pattern is formed in advance with respect to a predetermined position of the disc-shaped pattern transfer medium 10, as a mark M. Then, the disc-shaped pattern transfer medium 10 (the protective-film-pasted medium 12) on which the corresponding mark M is formed is imaged by a camera unit, and based on a result of detecting the position of the mark M in the captured image, the position and the angle (the rotation angle) of the protective-film-pasted medium 12 are adjusted to agree with the prescribed position and the prescribed angle, respectively.

In a case of the present example, two marks, which is a first mark M1 and a second mark M2, are formed as the mark M as illustrated in the drawing, and the position and the angle of the protective-film-pasted medium 12 are adjusted based on the detection positions of the first mark M1 and the second mark M2 among the captured images.

At this time, the first mark M1 and the second mark M2 are formed in different positions (the positions that do not overlap each other) on the disc-shaped pattern transfer medium 10, respectively. In the present example, the first mark M1 and the second mark M2 are arranged at both ends of the straight line passing the center of the disc, respectively.

As the specific adjustment technique using the two masks M, for example, the technique may be enumerated which performs the adjustment in such a manner that the detection position of the first mark M1 among the captured images agrees with the prescribed first position among the corresponding images and the detection position of the second mark M2 agrees with the prescribed second position among the corresponding image. Due to the technique like this, the position and the angle of the protective-film-pasted medium 12 may be caused to agree with the prescribed position and the prescribed angle, respectively.

Otherwise, the position and the angle of the protective-film-pasted medium 12 may be caused to agree with the prescribed position and the prescribed angle, respectively, by performing the adjustment even in such a manner that the detection position of, for example, the first mark M1 among the captured images agrees with the prescribed first position among the corresponding images, and the detection position of the first mark M1 and the detection position of the second mark M2 are positioned in a prescribed straight line among the corresponding images.

In addition, a variety of techniques may be adopted with regard to the adjustment technique of the arrangement relationship, and the adjustment technique of the arrangement relationship is not limited to a specific technique.

For example, in the technique that is described above as an example, the adjustment may be made in the rotation direction by forming two marks M, but the adjustment in the rotation direction may be achieved even by forming one mark M. For example, the position and the angle of the protective-film-pasted medium 12 may be caused to agree with the prescribed position and the prescribed angle, respectively, by performing the adjustment in such a manner that a shape of the mark M is made vertically asymmetrical (or horizontally asymmetrical) and the mark M detected among the captured images agrees with a prescribed mark position and a prescribed mark shape that are set among the corresponding images.

For purpose of confirmation, as is understood from preceding Fig. 3, the first mark M1 is formed based on the mark transfer pattern pm1 in the stamper St, and the second mark M2 is formed based on the mark transfer pattern pm2 in the stamper St.

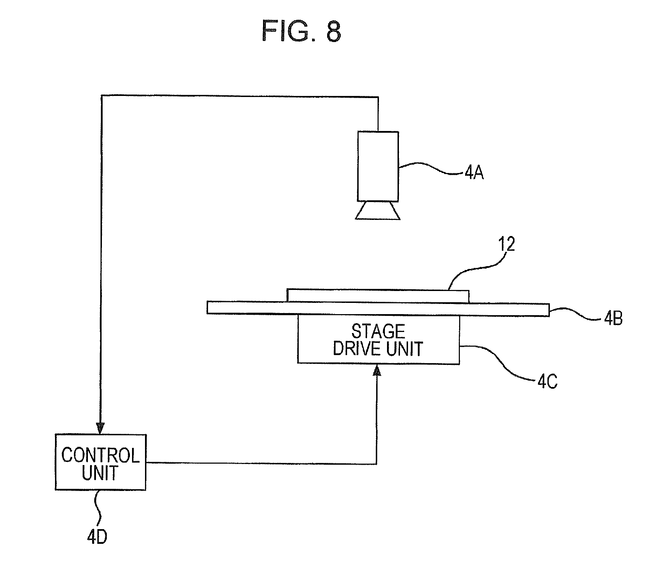

Fig. 8 is a view illustrating a configuration that has to be provided in the cutting unit 4 to achieve the positional relationship adjustment process as the embodiment as described above.

In the cutting unit 4, the protective-film-pasted medium 12 that arrives by conveyance after the formation of the protective film 11 by the covering process unit 3 is placed on a stage 4B provided in the corresponding cutting unit 4.

The stage 4B is maintained by a stage drive unit 4C in such a manner that the stage 4B is movable in the X direction (for example, the paper surface horizontal direction), and in the Y direction (the paper surface depth direction: the direction orthogonally intersecting the X direction) and is movable within the medium placement surface of the corresponding stage 4B in the rotation θ direction.

Furthermore, a camera unit 4A is provided in the cutting unit 4 in such a case, and a captured image signal of the camera unit 4A is supplied to a control unit 4D.

The control unit 4D adjusts (controls) the position and the rotation angle of the stage 4B by implementing an instruction with respect to the stage drive unit 4C based on a result of detecting the position of the mark M among the images captured by the camera unit 4A. In addition, since the technique for causing the control unit 4D to specifically adjust the position and the rotation angle of the stage 4B is described above as an example and thus additional description of this technique is omitted.

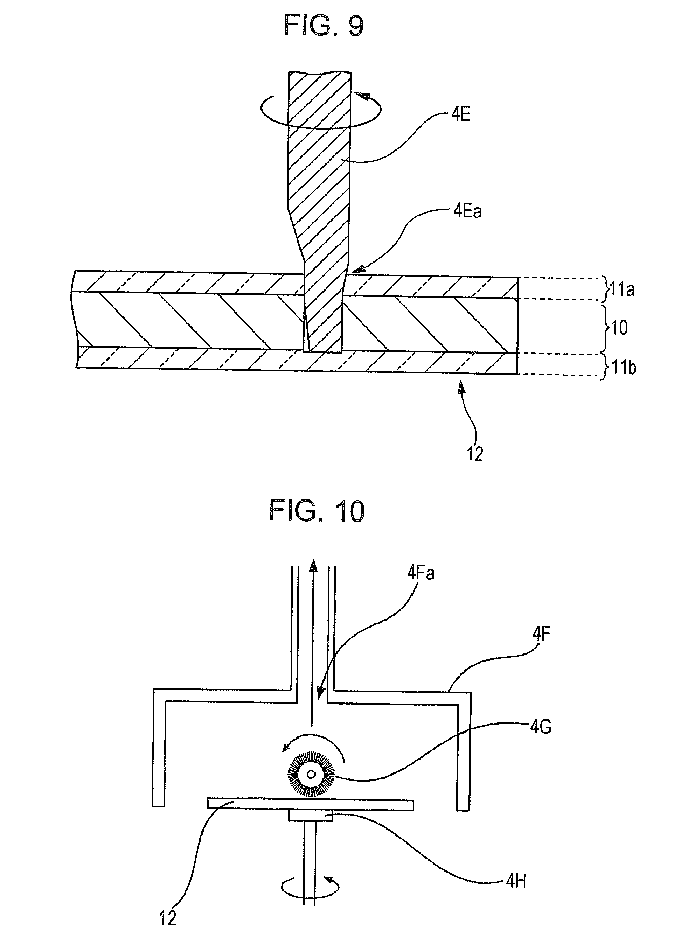

Fig. 9 is a view illustrating a cross-sectional structure of a drill portion (an end mill) 4E that the cutting unit 4 uses in cutting.

Furthermore, in Fig. 9, a cross-section of the periphery of the cutting part of the protective-film-pasted medium 12 at the time of cutting is illustrated, along with the cross-sectional structure of the drill portion 4E.

In the cutting unit 4, as illustrated in the drawing, the cutting is performed with respect to the protective-film-pasted medium 12 by causing the drill portion 4E to rotate.

At this point, as described above, the cutting starts from the protective film 11a formed on the pattern transfer surface of the disc-shaped pattern transfer medium 10 and stops at a position where the protective film 11b formed on the pattern non-transfer surface is not cut.

Because of this, the pattern transfer portion PT and the main portion of the medium may be integrally handled due to the connection with the corresponding protective film 11b in between, without the protective film 11b being cut.

Further, in the present embodiment, a taper portion 4Ea is formed in the periphery of a point part of the drill portion 4E as illustrated in the drawing. In this case, the formation of the taper portion 4Ea may cause the cutting to be performed, pushing the protective film 11a formed on the surface of the disc-shaped pattern transfer medium 10. As a result, the peeling of the protective film 11a at the time of cutting may be effectively prevented.

Fig. 10 is a view illustrating a configuration to remove the cutting pieces which the cutting unit 4 includes.

In a case of the present example, the protective-film-pasted medium 12 is conveyed to a configuration unit configured to remove the cutting pieces illustrated in the drawing, after the cutting by the drill portion 4E as described above is performed.

A housing 4F having an intake gate 4Fa and a turntable 4H are provided in the corresponding configuration unit as illustrated in the drawing. The protective-film-pasted medium 12 after cutting is set on the turntable 4H as illustrated in the drawing, and the corresponding protective-film-pasted medium 12 is rotatable by the turntable 4H, inside the housing 4F.

According to this configuration, the rotation of the turntable 4H may cause the cutting pieces attached to the protective-film-pasted medium 12 to be scattered, and the scattered cutting pieces may be absorbed and removed, via the intake gate 4Fa.

Furthermore, a rotation brush 4G is provided in the cutting unit 4 in such a case, and the rotation of the corresponding rotation brush 4G may also cause the cutting pieces attached to the protective-film-pasted medium 12 to be scattered.

Specifically, the rotation brush 4G is arranged inside the housing 4F, in such a manner that the brush portion thereof may come into contact with the protective-film-pasted medium 12 on the turntable 4H, and because of this, the cutting pieces attached to the protective-film-pasted medium 12 may be scattered and removed.

By the rotation brush 4G like this being provided together, the ability to remove the cutting pieces from the protective-film-pasted medium 12 may be further improved.

### 2. Modification Example

The embodiments according to the present invention are described above, but the present invention is not limited to the specified examples.

For example, description to this point has been of a case of applying the present invention to the manufacturing of a plate-shaped biochip, but the present invention may be appropriately applied to, for example, the manufacturing of a variety of optical parts such as a micro lens array, a micro peeler, and a micro prism.

The present invention may correspond to the manufacturing of a variety of parts by changing the patterning of the stamper and the cutting shape (the excision shape) used in the injection compression molding process.

Furthermore, the protective film 11a is formed directly on the surface of the disc-shaped pattern transfer medium 10, as described up to now, but for example, a necessary film such as a reflective film may be formed on the surface of the disc-shaped pattern transfer medium 10 and in such a case, the protective film 11a is formed with respect to the corresponding film.

Furthermore, the formation of the reflective film described above may be performed by, for example, sputtering. At this time, the process of manufacturing the optical disc may be used in forming the reflective film by the sputtering.

Furthermore, the formation of the protective film 11a is achieved by pasting the protective material sheet Prs as described up to now, but the technique for forming the protective film 11a is not limited to the corresponding technique. For example, the protective film 11a may be formed by applying and curing a liquid material (for example, a UV ink) of which the peeling is possible after being cured, using a spin-coating method. Otherwise, the protective film 11a may be formed using the formation of a film by the sputtering.

Furthermore, the covering process is provided, taking into consideration the prevention of the cutting pieces from being mixed into the transfer pattern and the general handling after cutting as described up to now, but the covering process may be omitted.

In such a case, when the removal of the cutting pieces is performed in the cutting process, as is described above, the prevention of the pattern transfer medium product from deteriorating in quality may be achieved.

Furthermore, the case is described as an example up to now, where the pattern transfer media 15 may be obtained after removal twice per disc, but the number of removals of the pattern transfer media per one disc is not limited to two, and may be one or three or more.

Furthermore, the present invention may be configured as follows.
(1) A pattern transfer medium manufacturing apparatus includes a disc injection compression molding unit that forms a disc-shaped pattern transfer medium by an injection compression molding using a disc molding die and a disc-shaped stamper, and a cutting unit that performs cutting on the periphery of a concave and convex pattern portion on the disc-shaped pattern transfer medium, which is formed due to a transfer by the injection compression molding, as a target object.
(2) The pattern transfer medium manufacturing apparatus according to (1), further includes a protective film formation unit that forms a protective film with respect to the disc-shaped pattern transfer medium that is in a state prior to the cutting by the cutting unit.
(3) In the pattern transfer medium manufacturing apparatus according to (2), the protective film formation unit forms the protective film with respect to a pattern transfer surface of the disc-shaped pattern transfer medium.
(4) In the pattern transfer medium manufacturing apparatus according to (3), the protective film formation unit forms the protective film with respect to a pattern non-transfer surface of the disc-shaped pattern transfer medium.
(5) In the pattern transfer medium manufacturing apparatus according to (4), the cutting unit starts cutting from the protective film formed on the pattern transfer surface of the disc-shaped pattern transfer medium and stops the cutting at a position where the protective film formed on the pattern non-transfer surface of the disc-shaped pattern transfer medium is not cut off.
(6) In the pattern transfer medium manufacturing apparatus according to any one of (1) to (5), the cutting unit adjusts an arrangement relationship of the disc-shaped pattern transfer medium with respect to a cutting unit by the cutting position, by using a pattern as a mark formed on the disc-shaped pattern transfer medium.
(7) In the pattern transfer medium manufacturing apparatus according to (1), the cutting unit has an absorption mechanism that absorbs cutting pieces.
(8) In the pattern transfer medium manufacturing apparatus according to (1), the cutting unit has a brush mechanism that removes the cutting pieces.
(9) The pattern transfer medium manufacturing apparatus according to any one of (2) to (8) further includes a removal unit that removes a pattern transfer medium having the concave and convex pattern portion, by separating the protective film from the disc-shaped pattern transfer medium on which the cutting is performed by the cutting unit.
(10) A pattern transfer medium manufacturing method includes forming a disc-shaped pattern transfer medium by an injection compression molding using a disc molding die and a disc-shaped stamper, and performing cutting on the periphery of a concave and convex pattern portion on the disc-shaped pattern transfer medium, which is formed due to a transfer by the injection compression molding, as a target object.
(11) A disc-shaped pattern transfer medium has a disc-shaped external appearance, and a predetermined concave and convex pattern is transferred onto at least a surface thereof. In addition, the periphery of the transfer portion of the concave and convex pattern is cut in an arbitrary shape and thus a connection to a main portion of a medium is cut off.
(12) In the disc-shaped pattern transfer medium according to (11), a protective film is formed on a transfer surface of the concave and convex pattern.
(13) In the disc-shaped pattern transfer medium according to (11), a protective film is formed on a non-transfer surface of the concave and convex pattern.
(14) A pattern transfer medium is manufactured by going through forming a disc-shaped pattern transfer medium by an injection compression molding using a disc molding die and a disc-shaped stamper, and performing cutting on the periphery of a concave and convex pattern portion on the disc-shaped pattern transfer medium, which is formed due to a transfer by the injection compression molding, as a target object.

The present disclosure contains subject matter related to that disclosed in Japanese Priority Patent Application JP 2011-256433 filed in the Japan Patent Office on November 24, 2011, the entire contents of which are hereby incorporated by reference.

It should be understood by those skilled in the art that various modifications, combinations, sub-combinations and alterations may occur depending on design requirements and other factors insofar as they are within the scope of the appended claims or the equivalents thereof.

## Claims

1. A pattern transfer medium manufacturing apparatus comprising:
a disc injection compression molding unit that forms a disc-shaped pattern transfer medium by an injection compression molding using a disc molding die and a disc-shaped stamper; and
a cutting unit that performs cutting on the periphery of a concave and convex pattern portion on the disc-shaped pattern transfer medium, which is formed due to a transfer by the injection compression molding as a target object.

2. The pattern transfer medium manufacturing apparatus according to claim 1, further comprising:
a protective film formation unit that forms a protective film with respect to the disc-shaped pattern transfer medium that is in a state prior to the cutting by the cutting unit.

3. The pattern transfer medium manufacturing apparatus according to claim 2,
wherein the protective film formation unit forms the protective film with respect to a pattern transfer surface of the disc-shaped pattern transfer medium.

4. The pattern transfer medium manufacturing apparatus according to claim 3,
wherein the protective film formation unit forms the protective film with respect to a pattern non-transfer surface of the disc-shaped pattern transfer medium.

5. The pattern transfer medium manufacturing apparatus according to claim 4,
wherein the cutting unit starts cutting from the protective film formed on the pattern transfer surface of the disc-shaped pattern transfer medium and stops the cutting at a position where the protective film formed on the pattern non-transfer surface of the disc-shaped pattern transfer medium is not cut off.

6. The pattern transfer medium manufacturing apparatus according to claim 1,
wherein the cutting unit adjusts an arrangement relationship of the disc-shaped pattern transfer medium with respect to a cutting position by the cutting unit, using a pattern as a mark formed on the disc-shaped pattern transfer medium.

7. The pattern transfer medium manufacturing apparatus according to claim 1,
wherein the cutting unit has an absorption mechanism that absorbs cutting pieces.

8. The pattern transfer medium manufacturing apparatus according to claim 1,
wherein the cutting unit has a brush mechanism that removes cutting pieces.

9. The pattern transfer medium manufacturing apparatus according to claim 2, further comprising:
a removal unit that removes a pattern transfer medium having the concave and convex pattern portion, by separating the protective film from the disc-shaped pattern transfer medium on which the cutting is performed by the cutting unit.

10. A pattern transfer medium manufacturing method comprising:
forming a disc-shaped pattern transfer medium by an injection compression molding using a disc molding die and a disc-shaped stamper; and
performing cutting on the periphery of a concave and convex pattern portion on the disc-shaped pattern transfer medium, which is formed due to a transfer by the injection compression molding, as a target object.

11. A disc-shaped pattern transfer medium comprising:
a disc-shaped external appearance; and
a predetermined concave and convex pattern transferred onto at least a surface thereof,
wherein the periphery of the transfer portion of the concave and convex pattern is cut in an arbitrary shape and thus a connection to a main portion of a medium is cut off.

12. The disc-shaped pattern transfer medium according to claim 11,
wherein a protective film is formed on a transfer surface of the concave and convex pattern.

13. The disc-shaped pattern transfer medium according to claim 11,
wherein a protective film is formed on a non-transfer surface of the concave and convex pattern.

14. A pattern transfer medium manufactured by manufacturing method comprising:
forming a disc-shaped pattern transfer medium by an injection compression molding using a disc molding die and a disc-shaped stamper; and
performing cutting on the periphery of a concave and convex pattern portion on the disc-shaped pattern transfer medium, a target object, which is formed due to a transfer by the injection compression molding as a target object.
